# EUROPEAN PATENT SPECIFICATION

(11) **EP 4 265 999 B1**
(45) Date of publication and mention of the grant of the patent: **23.09.2026**
(21) Application number: 21906501.8
(22) Date of filing: 09.12.2021
(51) Int. Cl.: G01B 7/16, G01B 7/28

(54) **ESTIMATION DEVICE, ESTIMATION METHOD, ESTIMATION PROGRAM, AND LEARNING MODEL GENERATION DEVICE**
SCHÄTZVORRICHTUNG, SCHÄTZVERFAHREN, SCHÄTZPROGRAMM UND LERNMODELLERZEUGUNGSVORRICHTUNG
DISPOSITIF D'ESTIMATION, PROCÉDÉ D'ESTIMATION, PROGRAMME D'ESTIMATION ET DISPOSITIF DE CRÉATION DE MODÈLE D'APPRENTISSAGE

(30) Priority: 18.12.2020 JP 2020210737
(43) Date of publication of application: 25.10.2023
(73) Proprietor: BRIDGESTONE CORPORATION, Chuo-ku Tokyo 104-8340 (JP); The University of Tokyo, Bunkyo-ku, Tokyo 113-8654 (JP)
(72) Inventor: WAKAO, Yasumichi, Tokyo 104-8340 (JP); SAKURAI, Ryo, Tokyo 104-8340 (JP); NAKAJIMA, Kohei, Tokyo 113-8654 (JP)
(74) Representative: Marks & Clerk LLP
(86) International application number: PCT/JP2021/045417
(87) International publication number: WO 2022/131138

(56) References cited:
- FR-A1- 3 088 006
- JP-A- 2014 228 507
- SAKURAI RYO ET AL: "Emulating a sensor using soft material dynamics: A reservoir computing approach to pneumatic artificial muscle", 2020 3RD IEEE INTERNATIONAL CONFERENCE ON SOFT ROBOTICS (ROBOSOFT), IEEE, 15 May 2020 (2020-05-15), pages 710 - 717, XP033781288, DOI: 10.1109/ROBOSOFT48309.2020.9115974
- LASITHA WEERAKOON ET AL: "Adaptive Tracking Control of Soft Robots using Integrated Sensing Skin and Recurrent Neural Networks", ARXIV.ORG, CORNELL UNIVERSITY LIBRARY, 201 OLIN LIBRARY CORNELL UNIVERSITY ITHACA, NY 14853, 17 November 2020 (2020-11-17), XP081815863
- NAKAJIMA KOHEI ET AL: "Exploiting the Dynamics of Soft Materials for Machine Learning", SOFT ROBOTICS, vol. 5, no. 3, 1 June 2018 (2018-06-01), pages 339 - 347, XP055835938, ISSN: 2169-5172, DOI: 10.1089/soro.2017.0075
- NAKAJIMA, KOHEI ET AL.: "Exploiting the Deformation Dynamics of Soft Materials as an Information Processing Device", THE TRANSACTIONS OF THE INSTITUTE OF ELECTRONICS, INFORMATION AND COMMUNICATION ENGINEERS, vol. 102, no. 2, 1 February 2019 (2019-02-01), pages 121 - 126, XP009537488

## Description

### Technical Field

The present disclosure relates to an estimation device, an estimation method, an estimation program, and a learning model generation device.

### Background Art

Conventionally, detection of deformation of flexible materials such as urethane members has been conducted. With flexible materials such as urethane members, it is difficult to detect deformation without inhibiting the deformation. Furthermore, because strain sensors used to detect rigid bodies such as metal deformation are difficult to utilize for flexible materials, special detection devices are required to detect deformation of flexible materials. For example, International Publication No. 2017-029905 discloses a technology that measures displacement and vibration of an object using a camera, acquires an image of deformation, and extracts an amount of deformation. Furthermore, JP-A No. 2013-101096 discloses a technology relating to a flexible tactile sensor that estimates an amount of deformation from an amount of light that is transmitted. Attention is also drawn to the following disclosures:
SAKURAI RYO ET AL: "Emulating a sensor using soft material dynamics: A reservoir computing approach to pneumatic artificial muscle", 2020 3RD IEEE INTERNATIONAL CONFERENCE ON SOFT ROBOTICS (ROBOSOFT), IEEE, 15 May 2020 (2020-05-15), pages 710-717;
LASITHA WEERAKOON ET AL: "Adaptive Tracking Control of Soft Robots using Integrated Sensing Skin and Recurrent Neural Networks", ARXIV.ORG, CORNELL UNIVERSITY LIBRARY, 201 OLIN LIBRARY CORNELL UNIVERSITY ITHACA, NY 14853, 17 November 2020;
FR 3 088 006 A1;
NAKAJIMA KOHEI ET AL: "Exploiting the Dynamics of Soft Materials for Machine Learning", SOFT ROBOTICS, vol. 5, no. 3, 1 June 2018 (2018-06-01), pages 339-347.

### SUMMARY OF INVENTION

### Technical Problem

However, when detecting deformation of a flexible material using, for example, a method that detects an amount of deformation such as displacement of an object using a camera and an image analysis method, the system including the camera and the image analysis becomes large in scale and is not preferred because it leads to an increase in device size. Furthermore, optical methods using a camera are unable to measure hidden portions not captured by the camera. Consequently, there is room for improvement in detecting deformation of flexible materials.

The present disclosure can estimate shape information of a pressure stimulus utilizing an electrical property at the time of deformation of a conductive flexible material without using a special detection device.

### Solution to Problem

A first aspect of the present invention provides an estimation device as claimed in claim 1. Second to fifth aspects of the present invention provide estimation devices as claimed in claims 2 to 5, respectively. A sixth aspect of the present invention provides an estimation method as claimed in claim 6. A seventh aspect of the present invention provides an estimation program as claimed in claim 7. An eighth aspect of the present invention provides a learning model generation device as claimed in claim 8.

### BRIEF DESCRIPTION OF THE DRAWINGS

FIG. 1 is a drawing showing an example of the configuration of a flexible material shape estimation device pertaining to an embodiment.
FIG. 2 is a drawing showing the concept of electrical paths in a flexible material pertaining to the embodiment.
FIG. 3 is a drawing relating to a learning process pertaining to the embodiment.
FIG. 4 is a drawing showing an example of a measurement device pertaining to the embodiment.
FIG. 5 is a drawing showing examples of pressing members pertaining to the embodiment.
FIG. 6 is a drawing showing an example of detection points in the flexible material pertaining to the embodiment.
FIG. 7 is a flowchart showing an example of a learning data collection process pertaining to the embodiment.
FIG. 8 is a drawing relating to a learning process in a learning process unit pertaining to the embodiment.
FIG. 9 is a flowchart showing an example of the flow of the learning process pertaining to the embodiment.
FIG. 10 is a drawing relating to the learning process in the learning process unit pertaining to the embodiment.
FIG. 11 is a drawing showing an example of the configuration of the flexible material shape estimation device pertaining to the embodiment.
FIG. 12 is a flowchart showing an example of the flow of an estimation process pertaining to the embodiment.
FIG. 13A is a drawing showing a time characteristic of a pressure value relating to an electrical property of the flexible material and the pressure stimulus pertaining to the embodiment.
FIG. 13B is a drawing showing a time characteristic of a depth of the flexible material relating to the electrical property of the flexible material and the pressure stimulus pertaining to the embodiment.
FIG. 13C is a drawing showing a time characteristic of an electrical resistance value relating to the electrical property of the flexible material and the pressure stimulus pertaining to the embodiment.
FIG. 13D is a drawing showing a time characteristic of an amount of change in the electrical resistance value relating to the electrical property of the flexible material and the pressure stimulus pertaining to the embodiment.
FIG. 14 is a drawing showing verification results relating to shape estimations pertaining to the embodiment.
FIG. 15 is a drawing showing verification results relating to shape estimations pertaining to the embodiment.
FIG. 16 is a drawing showing verification results relating to shape estimations pertaining to the embodiment.
FIG. 17A is a drawing showing a time characteristic of the electrical resistance value relating to the electrical property of the flexible material pertaining to the embodiment.
FIG. 17B is a drawing showing a time characteristic of the amount of change in the electrical resistance value relating to the electrical property of the flexible material pertaining to the embodiment.
FIG. 18A is a drawing showing results of an analysis of the electrical property pertaining to the embodiment, and shows results of plural pressing members.
FIG. 18B is a drawing showing results of the analysis of the electrical property pertaining to the embodiment, and shows results of some of the pressing members.
FIG. 19 is a drawing showing verification results relating to shape estimations pertaining to the embodiment.
FIG. 20 is a drawing showing verification results relating to shape estimations pertaining to the embodiment.
FIG. 21A is a drawing showing results of an analysis of the electrical property pertaining to the embodiment, and shows results of electrical resistance values.
FIG. 21B is a drawing showing results of the analysis of the electrical property pertaining to the embodiment, and shows results in which the analysis results are seen from a different direction.

### DESCRIPTION OF EMBODIMENT

An embodiment realizing the technology of the present disclosure will be described in detail below with reference to the drawings.

It will be noted that constituent elements and processes conducting tasks whose action and functions are the same are assigned the same reference signs throughout the drawings and redundant description may be omitted as appropriate. Furthermore, the present disclosure should not be construed as being limited in any way to the following embodiment and can be implemented with changes made thereto as appropriate within the scope of the object of the present disclosure, since the scope of protection of the present invention is defined by the appended claims.

Furthermore, although in the present disclosure estimation of a physical quantity with respect to a member that experiences nonlinear deformation is mainly described, it will be appreciated that the present disclosure can also be applied to estimation of a physical quantity with respect to a member that experiences linear deformation.

In the present disclosure, "flexible material" is a concept that includes a material at least part of which is capable of experiencing deformation such as deflection as a result of external force being applied thereto, and includes soft elastic bodies such as rubber materials, structures having a fibrous skeleton, and structures having plural microscopic air bubbles scattered inside. Examples of external force include pressure. Examples of structures having a fibrous skeleton and structures having plural microscopic air bubbles scattered inside include polymeric materials such as urethane materials. "Flexible material imparted with conductivity" is a concept that includes conductive materials, and includes materials in which conductivity is imparted to a flexible material to impart conductivity and materials in which a flexible material is conductive. Furthermore, the flexible material imparted with conductivity has a function wherein its electrical property changes in response to deformation. It will be noted that examples of physical quantities that give rise to the function wherein the electrical property changes in response to deformation include a pressure value due to a pressure stimulus. When causing the flexible material to deform, it is possible to cause the flexible material to deform in accompaniment with the shape of the pressure stimulus. Furthermore, examples of the physical quantity representing the electrical property that changes in response to deformation include the electrical resistance value. The electrical resistance value can be understood as the volume resistance value of the flexible material.

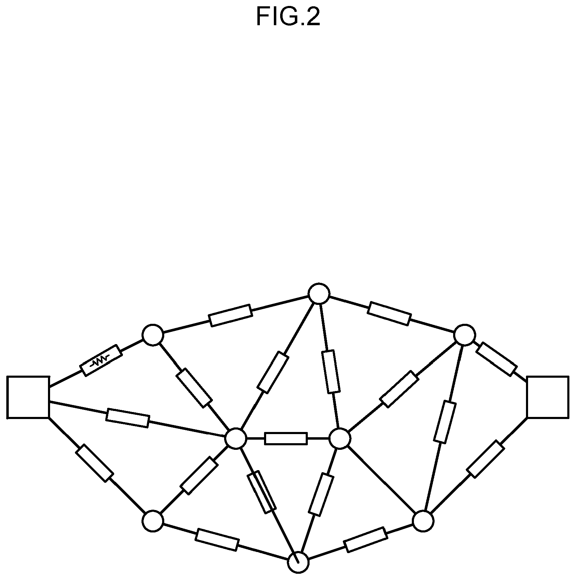

By having conductivity imparted to it, the flexible material manifests an electrical property in response to deformation. That is, as shown in FIG. 2, the flexible material imparted with conductivity has complexly linked electrical paths, and the electrical paths extend and contract and expand and shrink in response to deformation. Furthermore, it may also exhibit behavior where the electrical paths are temporarily disconnected and behavior where connections different from before occur. Consequently, the flexible material exhibits a behavior having different electrical properties in response to applied pressure (e.g., a pressure stimulus) between positions (e.g., detection points) separated by a predetermined distance. For this reason, from the standpoint of changes in the shape of the flexible material, the electrical property is thought to change in response to the force (e.g., a pressure stimulus) applied to the flexible material and the shape of the force applied to the flexible material.

An estimation device of the present disclosure uses a learning model that has been trained to use as learning data an electrical property with which is associated time-series information that changes in response to deformation of a flexible material and shape information of pressure stimuli that impart deformation to the flexible material and to receive the electrical property as input and to output the shape information. The estimation device inputs to the learning model the electrical property in the flexible material which is an estimation target object and estimates the output thereof as shape information of the estimation target object.

It will be noted that in the present disclosure, in order to grasp the physical quantity in the elastic body, a case is described where a member (hereinafter called a conductive flexible member) in which a urethane member is permeated with a conductive material is applied as an example of the flexible material. Furthermore, a case is described where a pressure stimulus resulting from an application member with a predetermined shape is applied to the physical quantity that causes the flexible material to deform and where the electrical resistance value is applied to the physical quantity that changes in response to deformation of the flexible material.

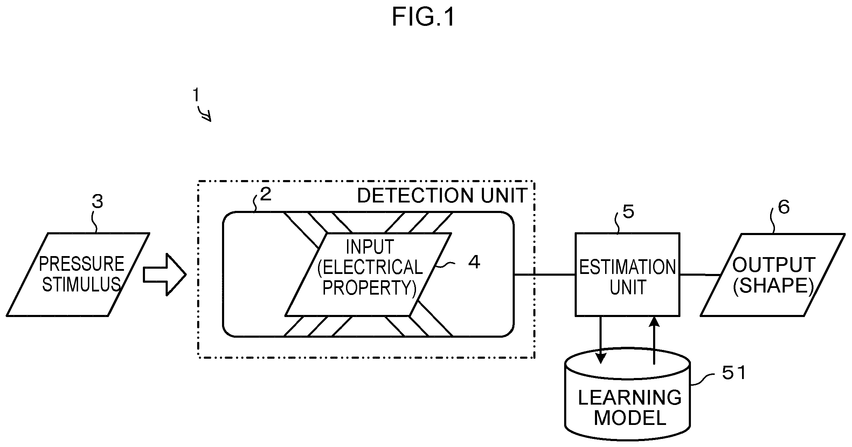

FIG. 1 shows an example of the configuration of a flexible material shape estimation device 1 serving as the estimation device of the present disclosure.

An estimation process in the flexible material shape estimation device 1 uses a trained learning model, which has been trained using as input application data (at least shape values) labeled with pressure stimuli that were applied to a conductive flexible member 2 and electrical resistance data (i.e., electrical resistance values) of the conductive flexible member 2, and estimates and outputs shape data of an unknown pressure stimulus that has been applied to the conductive flexible member 2.

That is, the flexible material shape estimation device 1 estimates, from the electrical property in the flexible material whose shape has been changed by a pressure stimulus applied to the flexible material, the shape of the pressure stimulus applied to the flexible material. Because of this, it becomes possible to identify the shape of the pressure stimulus applied to the flexible material without using a special device or a large device or directly measuring the deformation of the flexible member.

In this embodiment, the conductive flexible member 2 is applied as a detection unit. That is, as shown in FIG. 1, the flexible material shape estimation device 1 includes an estimation unit 5. Input data 4 representing a magnitude of electrical resistance (electrical resistance value) corresponding to a pressure stimulus 3 that has been applied to the conductive flexible member 2 are input to the estimation unit 5. Furthermore, the estimation unit 5 outputs output data 6 representing a physical quantity (shape value) of the pressure stimulus 3 that has been applied to the conductive flexible member 2 of an estimation result. The estimation unit 5 includes a trained learning model 51.

The learning model 51 is a trained model that derives, from the electrical resistance (the input data 4) of the conductive flexible member 2 to which the pressure stimulus 3 has been applied, the shape (the output data 6) of the pressure stimulus that has been applied to the conductive flexible member 2. The learning model 51 is, for example, a model that defines a trained neural network and is expressed as sets of information about weights (strengths) of connections between nodes (neurons) that make up the neural network.

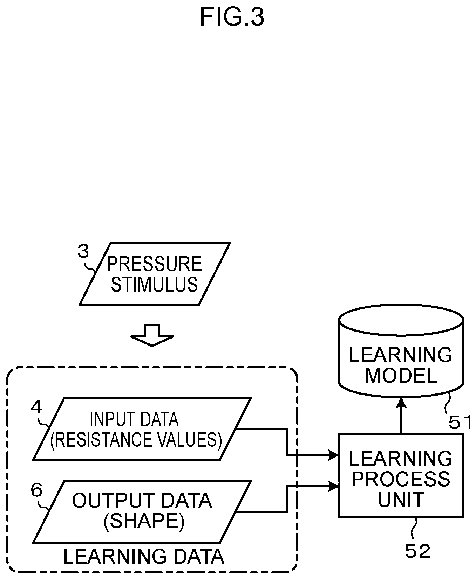

The learning model 51 is generated by a learning process of a learning process unit 52 (FIG. 3). The learning process unit 52 performs a learning process using time-series electrical resistances (the input data 4) in the conductive flexible member 2 to which the pressure stimulus 3 has been applied. That is, the learning process unit 52 uses, as learning data, a large amount of data obtained by measuring, in a time series, electrical resistances between detection points separated by a predetermined distance in the conductive flexible member 2 labeled with the shape of the pressure stimulus 3. Specifically, the learning data include a large amount of sets of input data including electrical resistance values (the input data 4) and information (the output data 6) representing the shape of the pressure stimulus 3 corresponding to the input data. Here, for example, time-series information is associated with, by applying information representing measurement times to, each of the electrical resistance values (the input data 4) of the conductive flexible member 2. In this case, the information representing the measurement times may also be applied to sets of successive electrical resistance values when the pressure stimulus has been applied to the conductive flexible member 2 to associate the time-series information.

Next, the learning process performed by the learning process unit 52 will be described.

First, learning data used in the learning process will be described.

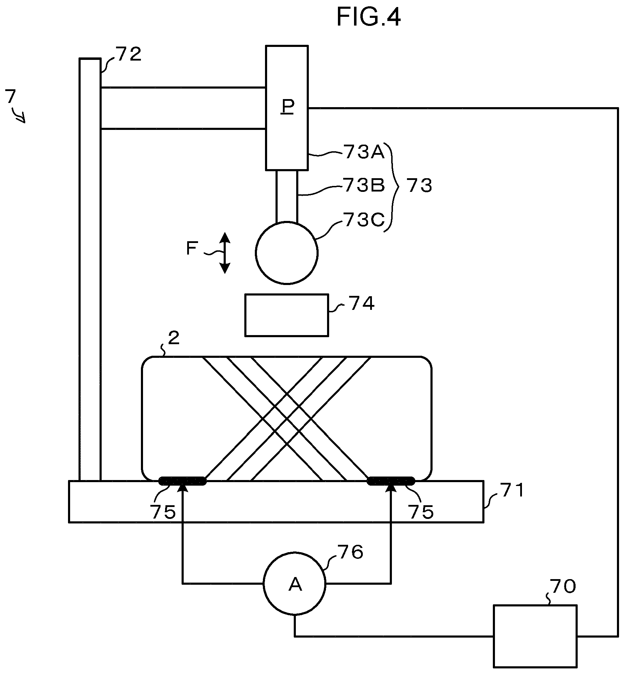

FIG. 4 shows an example of a measurement device 7 that measures a physical quantity in the conductive flexible member 2.

In the measurement device 7, a pressure application unit 73 for applying a pressure stimulus (a physical quantity that causes the conductive flexible member 2 to deform) to the conductive flexible member 2 is mounted to a fixed part 72 that is fixed to a base 71. The pressure application unit 73 includes a pressure application body 73A, an arm 73B that is extendable from and retractable into the pressure application body 73A, and a distal end portion 73C that is mounted to a distal end of the arm 73B. In the pressure application unit 73, the pressure application body 73A is fixed to the fixed part 72, the arm 73B is extended and retracted in accordance with input signals, and the distal end portion 73C is moved in predetermined directions (the directions of arrow F).

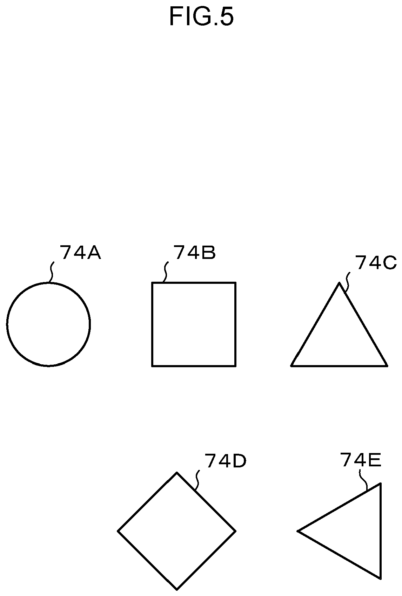

The conductive flexible member 2 is installed on the base 71, and a pressing member 74 with a predetermined shape is disposed between the distal end portion 73C of the pressure application unit 73 and the conductive flexible member 2. It will be noted that in this embodiment pressing members 74A to 74E shown in FIG. 5 are used as examples of the pressing member 74 with a predetermined shape. The pressing member 74A is a pressing member that applies a pressure stimulus in the shape of a circle to the conductive flexible member 2, the pressing member 74B is a pressing member that applies a pressure stimulus in the shape of a quadrilateral, and the pressing member 74C is a pressing member that applies a pressure stimulus in the shape of a triangle. It will be noted that in this embodiment, in consideration of the orientation of the pressing member 74, a pressing member that applies a pressure stimulus in an orientation different from that of the pressing member 74B is used as the pressing member 74D, and a pressing member that applies a pressure stimulus in an orientation different from that of the pressing member 74C is used as the pressing member 74E.

The pressure application unit 73 operates in such a way that, when the arm 73B extends, the distal end portion 73C pushes the pressing member 74 into the conductive flexible member 2. The surface of the conductive flexible member 2 on the base 71 side includes detection points 75 for detecting the electrical property (i.e., the physical quantity representing the electrical property of the conductive flexible member 2; here, electrical resistance values). The detection points 75 are disposed in different plural positions separated by a predetermined distance in order to detect the electrical resistance values of the conductive flexible member 2.

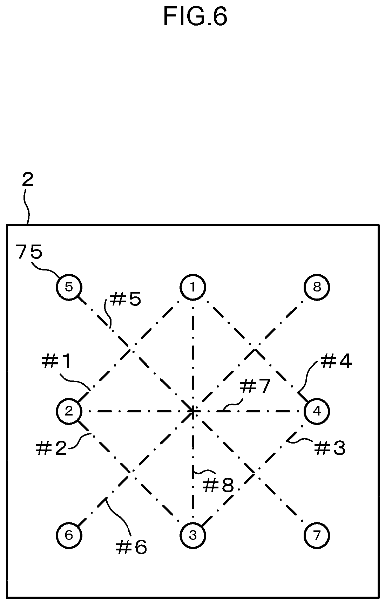

In this embodiment, plural (in FIG. 6, eight) detection points 75 arranged in a grid shown in FIG. 6 are applied as an example of the detection points 75 in the conductive flexible member 2. By selecting any two detection points 75 of these plural detection points 75, it becomes possible to detect the electrical resistance value (e.g., volume resistance value) in the conductive flexible member 2. In FIG. 6, the eight detection points 75 are denoted by figures (circular figures) representing each of the detection points 75 inside of which are numerals representing each of the first to eighth detection points 75. Furthermore, in the example shown in FIG. 6, a first detection set #1 that detects an electrical resistance value is represented by the first detection point 75 and the second detection point 75. The second detection point 75 and the third detection point 75 represent a second detection set #2, the third detection point 75 and the fourth detection point 75 represent a third detection set #3, and the fourth detection point 75 and the first detection point 75 represent a fourth detection set #4. The fifth detection point 75 and the seventh detection point 75 represent a fifth detection set #5, and the sixth detection point 75 and the eighth detection point 75 represent a sixth detection set #6. The second detection point 75 and the fourth detection point 75 represent a seventh detection set #7, and the first detection point 75 and the third detection point 75 represent an eighth detection set #8.

It will be noted that in this embodiment a case is described where the electrical property (the electrical resistance value) of the conductive flexible member 2 is detected using any one detection set of the aforementioned detection sets.

The measurement device 7 includes an electrical property detection unit 76 that is connected to the detection points 75 and detects the electrical property (i.e., the electrical resistance value). The measurement device 7 includes a controller 70 that is connected to the pressure application unit 73 and the electric property detection unit 76. The controller 70 controls the pressure application unit 73 to apply a pressure stimulus to the conductive flexible member 2 and acquires and stores the electrical resistance values resulting from the application of the pressure stimulus to the conductive flexible member 2. It will be noted that information representing the shape of the pressure stimulus to the conductive flexible member 2, that is, the shape of the pressing member 74, is associated with the electrical resistance values that are stored.

The measurement device 7 can acquire, in a time series, plural data sets of the electrical resistance values in the conductive flexible member 2 with respect to the shape of the pressing member 74 in pressing control of the pressing member 74.

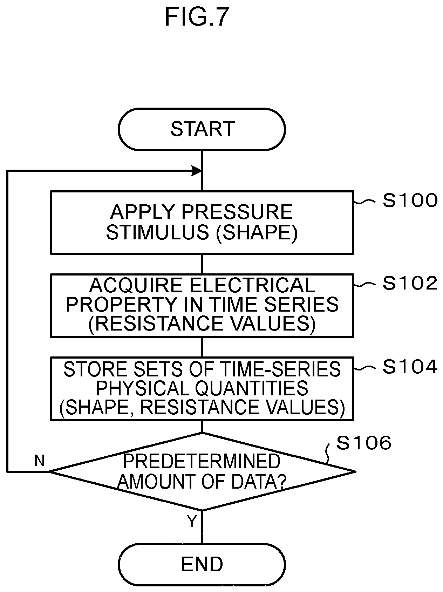

The controller 70 can be configured to include a computer including a CPU not shown in the drawings and executes a learning data collection process. FIG. 7 shows an example of the learning data collection process. In step S100 the controller instructs application of the pressure stimulus by the pressing member 74 to the conductive flexible member 2, and in step S102 the controller acquires, in a time series, the electrical resistance values in the conductive flexible member 2. In the next step S104 the controller applies the shape of the pressing member 74 as a label to the time-series electrical resistance values it has acquired and stores them. The controller 70 repeats the above processes until the sets of the shapes of the pressing members 74 and the electrical resistance values of the conductive flexible member 2 reach a predetermined number or a predetermined amount of time (the judgment is "no" in step S106 until a "yes" judgment is reached).

Consequently, by performing pressing control of the pressure stimuli applied by the pressing members 74 to the conductive flexible member 2, it becomes possible for the controller 70 to acquire in a time series, and store, the electrical resistance values in the conductive flexible member 2 for each shape of the pressing members 74. The sets of time-series electrical resistance values of the conductive flexible member 2 for each shape of the pressing members 74 that have been stored in the controller 70 become learning data.

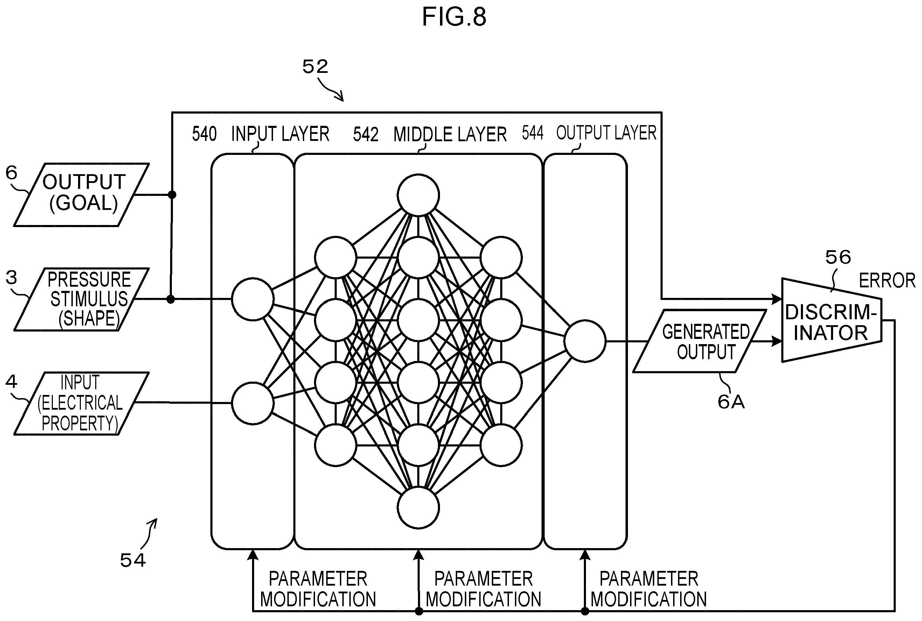

Next, the learning process unit 52 will be described with reference to FIG. 8.

The learning process unit 52 includes a generator 54 and a computing unit 56. The generator 54 has the function of generating output in consideration of the relationships between the electrical resistance values that were acquired in a time series which are the input.

Furthermore, the learning process unit 52 holds, as learning data, numerous sets of the input data 4 (electrical resistance values) that have been measured by the measurement device 7 and the output data 6 (shapes) which are data relating to the pressing members 74 that have been applied to the conductive flexible member 2 as pressure stimuli.

In the example shown in FIG. 8, the generator 54 includes an input layer 540, a middle layer 542, and an output layer 544 and configures a known neural network (NN). The neural network itself is a well-known technology, so detailed description thereof will be omitted, but the middle layer 542 includes numerous node groups (neuron groups) having inter-node connections and feedback connections. Data from the input layer 540 are input to the middle layer 542, and data of computational results in the middle layer 542 are output to the output layer 544.

The generator 54 is a neural network that generates, from the input data 4 (electrical resistances) that have been input, generated output data 6Arepresenting the shapes of the pressing members 74. The generated output data 6A are data obtained by estimating, from the input data 4 (electrical resistances), the shapes of the pressing members 74 by which the pressure stimuli were applied to the conductive flexible member 2. The generator 54 generates, from the input data 4 (electrical resistances) that have been input in a time series, generated output data representing shapes close to the shapes of the pressing members 74 by which the pressure stimuli were applied to the conductive flexible member 2. By learning using large numbers of the input data 4 (electrical resistances), the generator 54 becomes able to generate the generated output data 6A closer to the shapes of the pressing members 74 by which the pressure stimuli were applied to the conductive flexible member.

The computing unit 56 is a computing unit that compares the generated output data 6A to the output data 6 of the learning data and computes the error of the comparison result. The learning process unit 52 inputs the generated output data 6A and the output data 6 of the learning data to the computing unit 56. In response, the computing unit 56 computes the error between the generated output data 6A and the output data 6 of the learning data and outputs a signal representing the computational result.

The learning process unit 52 trains the generator 54 to tune the weight parameters of the connections between the nodes based on the error computed by the computing unit 56. Specifically, the learning process unit 52 uses a technique such as gradient descent or backpropagation, for example, to feed back to the generator 54 the weight parameters of the connections between the nodes of the input layer 540 and the middle layer 542 in the generator 54, the weight parameters of the connections between the nodes in the middle layer 542, and the weight parameters of the connections between the nodes of the middle layer 542 and the output layer 544. That is, the learning process unit 52 uses the output data 6 of the training data as a goal to optimize the connections between all the nodes so as to minimize error between the generated output data 6A and the output data 6 of the learning data.

The learning model 51 is generated by the learning process of the learning process unit 52. The learning model 51 is expressed as sets of information about the weight parameters (weights or strengths) of the connections between the nodes of the learning results obtained by the learning process unit 52.

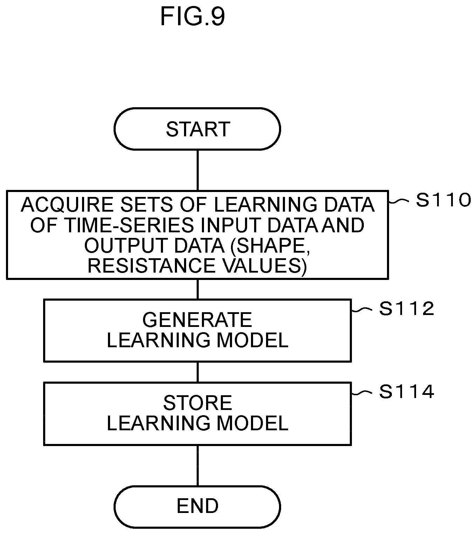

The learning process unit 52 is configured to include a computer including a CPU not shown in the drawings and can execute the learning process. For example, as shown in an example of the learning process in FIG. 9, in step S110 the learning process unit 52 acquires the input data 4 (electrical resistances) labeled with the information representing the shapes of the pressing members 74, which are the learning data of the results measured in a time series. In step S112 the learning process unit 52 generates the learning model 51 using the learning data of the results measured in a time series. That is, the learning process unit 52 obtains the sets of information about the weight parameters (weights or strengths) of the connections between the nodes of the learning results obtained by learning using a large amount of the learning data as described above. Then, in step S114 the learning process unit 52 stores, as the learning model 51, data expressed as the sets of information about the weight parameters (weights or strengths) of the connections between the nodes of the learning results.

It will be noted that the generator 54 may use a recurrent neural network having the function of generating output in consideration of the relationships between the time-series input, or may use other methods.

The flexible material shape estimation device 1 uses, as the learning model 51, the trained generator 54 generated by the method exemplified above (i.e., the data expressed as the sets of information about the weight parameters of the connections between the nodes of the learning results). By using the sufficiently trained learning model 51, it is not impossible to also identify, from the time-series electrical resistance values in the pressure stimuli applied by the pressing members 74 to the conductive flexible member 2, the shapes of the pressing members 74 that have been pressed against the conductive flexible member 2.

It will be noted that the process performed by the learning process unit 52 is an example of a process of a learning model generation device of the present disclosure. Furthermore, the flexible material shape estimation device 1 is an example of an estimation unit and the estimation device of the present disclosure.

In this connection, as described above, the conductive flexible member 2 has complexly linked electrical paths (e.g., see FIG. 2), exhibits behaviors in which the electrical paths extend and contract, expand and shrink, undergo temporary disconnections, and form new connections in response to deformation, and resultantly exhibits behaviors having different electrical properties in response to applied force (e.g., the pressure stimuli). This means that the conductive flexible member 2 can be treated as a reservoir that stores data relating to the deformation of the conductive flexible member 2. That is, the flexible member shape estimation device 1 can apply the conductive flexible member 2 to a network model called physical reservoir computing (PRC) (hereinafter called PRCN). PRC and PRCN themselves are known technologies, so detailed description thereof will be omitted; that is, PRC and PRCN are suitably applicable to estimating information relating to deformation of the conductive flexible member 2.

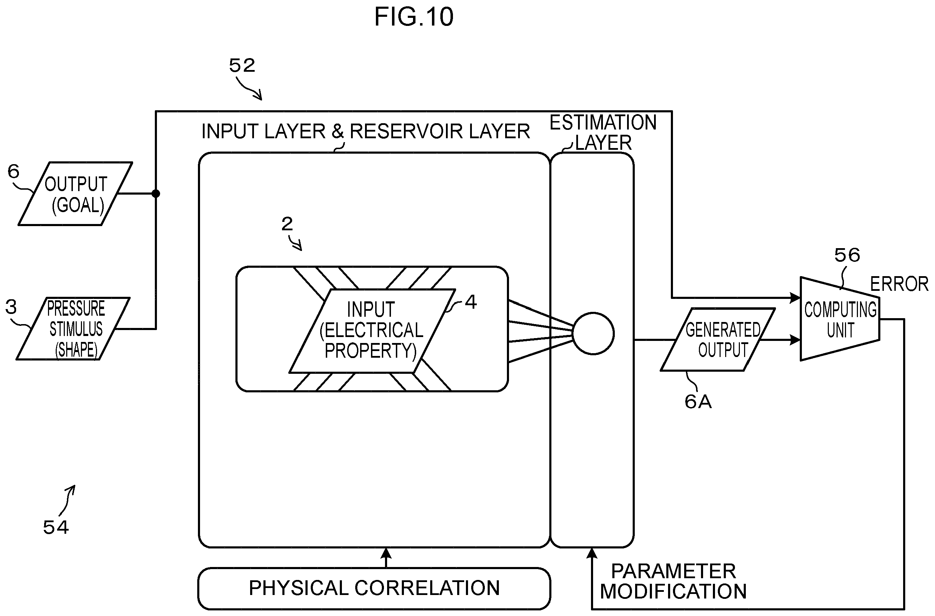

FIG. 10 shows an example of the learning process unit 52 that learns by treating the conductive flexible member 2 as a reservoir that stores data relating to the deformation of the conductive flexible member 2. The conductive flexible member 2 has an electrical property

(electrical resistance value) responsive to each of various pressure stimuli, functions as an input layer that inputs electrical resistance values, and functions as a reservoir layer that stores data relating to the deformation of the conductive flexible member 2. The conductive flexible member 2 outputs different electrical properties (the input data 4) in response to the applied pressure stimuli 3 (the shapes of the pressing members), so it is possible to estimate, in an estimation layer, the applied pressure stimuli 3 (the shapes of the pressing members) from the electrical resistance values of the conductive flexible member 2. Consequently, in the learning process, the estimation layer needs to be trained.

The flexible material shape estimation device 1 described above can be realized by, for example, causing a computer to execute a program representing the functions described above.

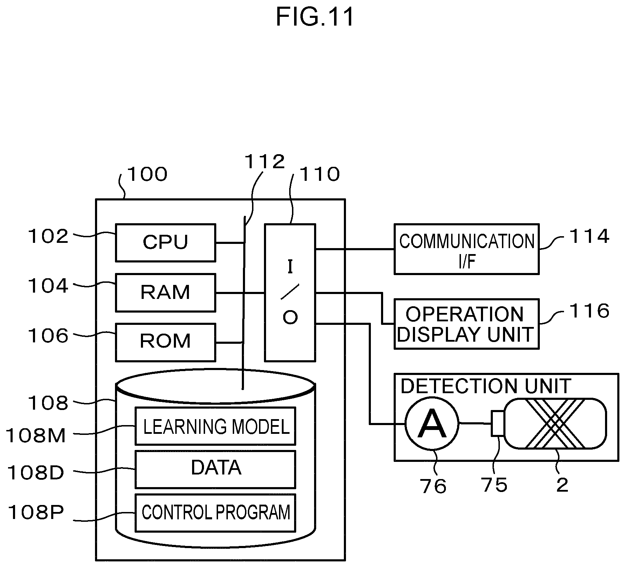

FIG. 11 shows an example of a case where the flexible material shape estimation device 1 is configured to include a computer as an execution device that executes processes that realize the various functions of the flexible material shape estimation device 1.

The computer functioning as the flexible material shape estimation device 1 shown in FIG. 8 includes a computer body 100 shown in FIG. 11. The computer body 100 includes a CPU 102, a RAM 104 such as a volatile memory, a ROM 106, an auxiliary storage device 108 such as a hard disk device (HDD), and an input/output interface (I/O) 110. The CPU 102, the RAM 104, the ROM 106, the auxiliary storage device 108, and the input/output I/O 110 are configurations connected to each other via a bus 112 so as to be capable of exchanging data and commands with each other. Furthermore, connected to the input/output I/O 110 are a communication unit 114 for communicating with an external device and an operation display unit 116 such as a display and/or a keyboard. The communication unit 114 functions acquires the input data 4 (electrical resistances) with the conductive flexible member 2. That is, the communication unit 114 can acquire the input data 4 (electrical resistances) from the electrical property detection unit 76 that includes the conductive flexible member 2, which is a detection unit, and is connected to the detection points 75 in the conductive flexible member 2.

In the auxiliary storage device 108 is stored a control program 108P for causing the computer body 100 to function as the flexible material shape estimation device 1 as an example of the estimation device of the present disclosure. The CPU 102 reads the control program 108P from the auxiliary storage device 108, loads it to the RAM 104, and executes processing. Because of this, the computer body 100 in which the control program 108P is executed operates as the flexible material shape estimation device 1 as an example of the estimation device of the present disclosure.

It will be noted that in the auxiliary storage device 108 is stored a learning model 108M including the learning model 51 and data 108D including various data. The control program 108P may also be provided by a recording medium such as a CD-ROM.

Next, an estimation process in the flexible material shape estimation device 1 realized by the computer will be described.

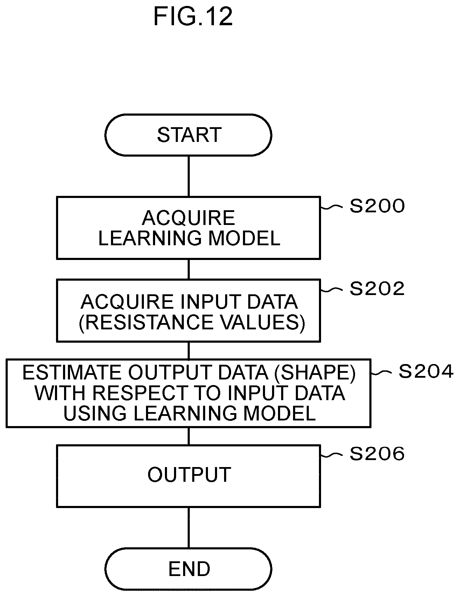

FIG. 12 shows an example of the flow of an estimation process performed by the control program 108P executed in the computer body 100.

The estimation process shown in FIG. 12 is executed by the CPU 102 when power to the computer body 100 is switched on. That is, the CPU 102 reads the control program 108P from the auxiliary storage device 108, loads it to the RAM 104, and executes processing.

First, in step S200 the CPU 102 acquires the learning model 51 by reading the learning model 51 from the learning model 108M of the auxiliary storage device 108 and loading it to the RAM 104. Specifically, the CPU 102 loads to the RAM 104 the network model constituting the connections between the nodes resulting from the weight parameters expressed as the learning model 51. Thus, the learning model 51, by which the connections between the nodes resulting from the weight parameters are realized, is constructed.

Next, in step S202 the CPU 102 acquires, in a time series via the communication unit 114, unknown input data 4 (electrical resistances) with which to estimate the shape of a pressing member by which a pressure stimulus was applied to the conductive flexible member 2.

Next, in step S204 the CPU 102 uses the learning model 51 acquired in step S200 to estimate the output data 6 (the shape of an unknown estimation target object) corresponding to the input data 4 (electrical resistances) acquired in step S202.

Then, in the next step S206 the CPU 102 outputs the output data 6 (the shape of the estimation target object) of the estimation results via the communication unit 114 and ends the processing routine.

It will be noted that the estimation process shown in FIG. 12 is an example of a process executed by the estimation method of the present disclosure.

As described above, according to the present disclosure, it becomes possible to estimate, from the input data 4 (electrical resistances) that change in response to the pressure stimulus 3 applied to the conductive flexible member 2, the shape of a target object that has applied a pressure stimulus to the conductive flexible member 2. That is, it becomes possible to estimate the shape of a pressure stimulus, for example an estimation target object, applied to the flexible member without using a special device or a large device or directly measuring the deformation of the flexible member.

Next, verification results obtained by verifying estimations of the shape of a target object when the target object has been pressed against the conductive flexible member 2 in the flexible material shape estimation device 1 described above will be described.

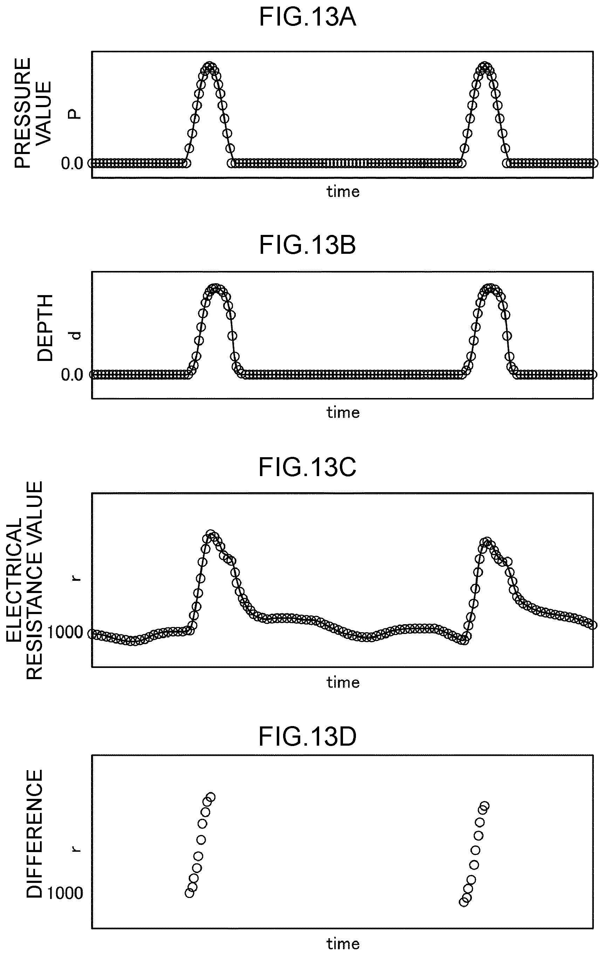

FIG. 13A to FIG. 13D show characteristics of the electrical properties (electrical resistance values) of the conductive flexible member 2 and the pressure stimulus when the pressure stimulus has been applied by the pressing member 74 to the conductive flexible member 2. FIG. 13A shows the time characteristic of the pressure value which is the pressure stimulus applied to the conductive flexible member 2. FIG. 13B shows the time characteristic of the depth of the amount of deformation of the conductive flexible member 2 when the pressure value shown in FIG. 13A has been applied to the conductive flexible member 2. FIG. 13C shows the time characteristic of the electrical resistance value of the conductive flexible member 2 in detection set #1 when the pressure value shown in FIG. 13A has been applied to the conductive flexible member 2. FIG. 13D shows the time characteristic relating to the amount of change in the electrical resistance value from the start of application of the pressure stimulus to the conductive flexible member 2, that is, the start of pressing. Examples of time characteristics relating to the amount of change in the electrical resistance value include the time characteristic of the difference.

As shown in FIG. 13A to FIG. 13D, it can be confirmed that, when the pressure stimulus has been applied to the conductive flexible member 2, the electrical resistance value (volume resistance value) of the conductive flexible member 2 exhibits a changing characteristic in correspondence to the pressure stimulus. Furthermore, it can be confirmed, also from the time characteristic (e.g., the difference time characteristic representing difference) relating to the amount of change in the electrical resistance value from the start of pressing, that the electrical resistance value changes in a time series in response to deformation of the flexible material.

Next, estimation results resulting from differences in the shapes of the pressing members 74 that apply a pressure stimulus to the conductive flexible member 2 were verified.

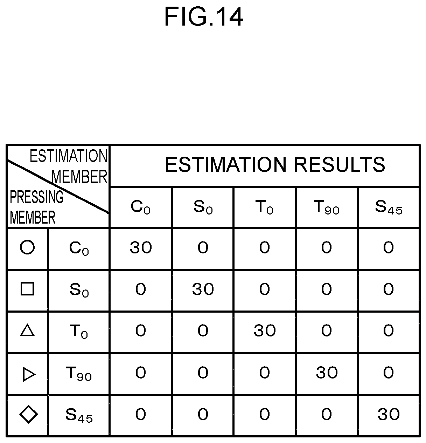

FIG. 14 shows verification results obtained by verifying estimation results resulting from differences in the shapes of the pressing members 74 that apply a pressure stimulus to the conductive flexible member 2. In this verification, in regard to the pressing members 74, forty pressing tests were performed in regard to each of the pressing members 74A to 74E with the different shapes, and the electrical resistance values of each which changed in a time series were collected as learning data. Then, a learning model trained on the collected learning data was constructed, and the learning model was used to perform thirty shape estimation tests. It will be noted that in FIG. 14 C₀ denotes the pressing member 74A, S₀ denotes the pressing member 74B, T₀ denotes the pressing member 74C, T₉₀ denotes the pressing member 74D, and S₄₅ denotes the pressing member 74E. The estimation results show the number of estimations with respect to shapes of estimation members at the time of the pressing by the pressing members 74.

As shown in FIG. 14, according to the flexible material shape estimation device 1 described above, even when pressure stimuli have been applied to the conductive flexible member 2 by the pressing members 74 with the different shapes, it can be confirmed that their shapes can be estimated.

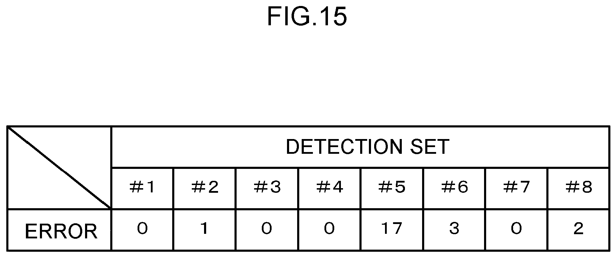

FIG. 15 shows verification results obtained by verifying results of estimations of the shape of the pressing member 74 in different detection sets. In this verification, in regard to the same pressing member 74, forty pressing tests were performed in regard to the different detection sets #1 to #8, and the electrical resistance values of each which changed in a time series were collected as learning data. Then, a learning model trained on the collected learning data was constructed, and the learning model was used to implement thirty shape estimation tests.

As shown in FIG. 15, according to the flexible material shape estimation device 1 described above, it can be confirmed that, by setting the detection set, that is, the detection position (e.g., detection set #1), the shape can be well estimated even with one detection set.

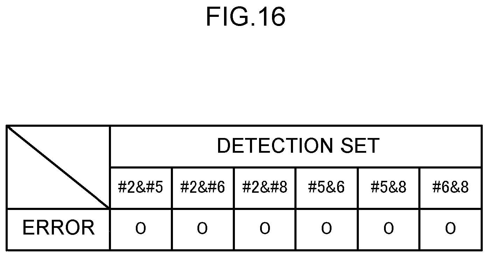

FIG. 16 shows verification results obtained by verifying results of estimations of the shape of the pressing member 74 by combinations of the different plural detection sets. In this verification also, the aforementioned forty pressing tests were conducted, and a learning model trained on the collected learning data was used to implement thirty shape estimation tests.

As shown in FIG. 16, according to the flexible material shape estimation device 1 described above, it can be confirmed that, by combining the plural detection sets, the shape can be well estimated with detection sets in any position.

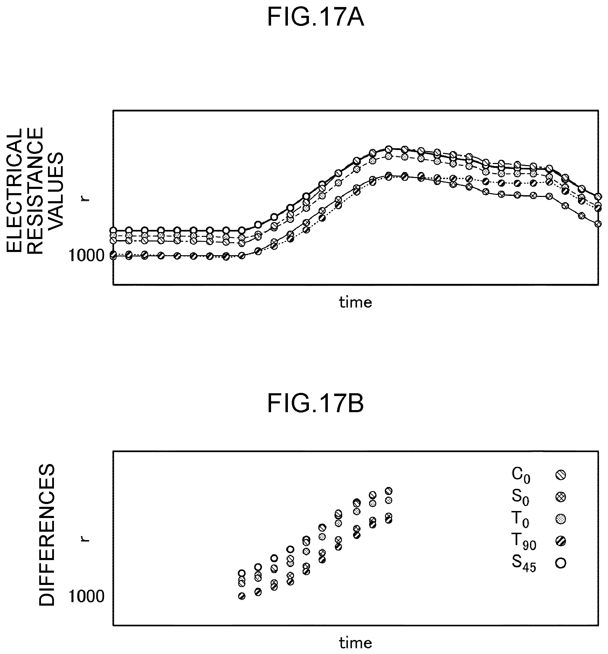

FIG. 17A and FIG. 17B show the time characteristic relating to the electrical property (electrical resistance value) of the conductive flexible member 2 when a pressure stimulus has been applied to the conductive flexible member 2 by each of the plural pressing members 74.

FIG. 17A shows the time characteristic of the electrical resistance value of the conductive flexible member 2 when a pressure stimulus has been applied to the conductive flexible member 2 by each of the pressing members 74A to 74E. FIG. 17B shows, in regard to each of the pressing members 74A to 74E, the amount of change in the electrical resistance value from the start of application of the pressure stimulus, that is, from the start of pressing.

As shown in FIG. 17A and FIG. 17B, it can be confirmed that the property wherein the electrical resistance value (volume resistance value) of the conductive flexible member 2 changes differs in regard to each of the pressing members 74A to 74E with the different shapes.

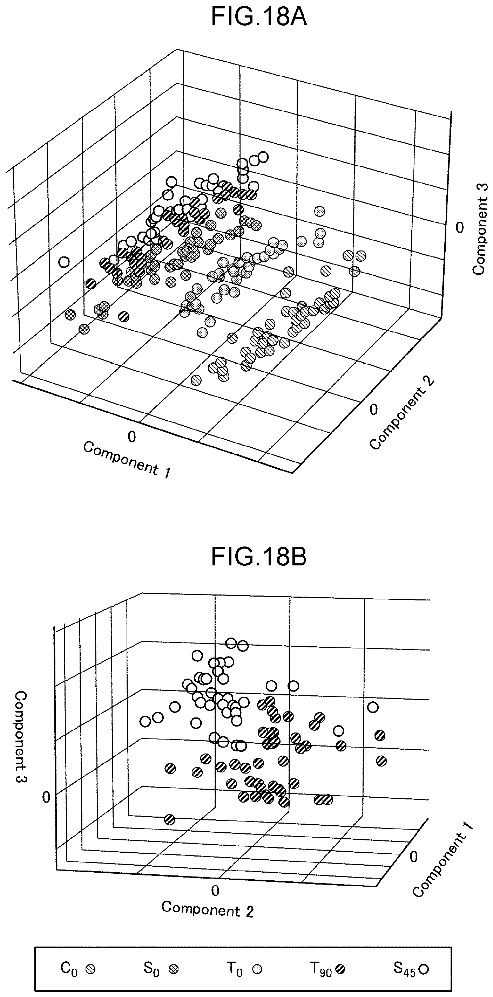

FIG. 18A and FIG. 18B show results of three-dimensionally displaying results of a principal component analysis in relation to the electrical properties shown in FIG. 17A and

FIG. 17B. The principal component analysis results relating to each of the pressing members 74A to 74E are shown in FIG. 18A, and the principal component analysis results relating to the pressing members 74D and 74E are shown in FIG. 18B.

As shown in FIG. 18A and FIG. 18B, each of the pressing members 74A to 74E with the different shapes have separated structures, and it can be confirmed that each of the pressing members 74A to 74E with the different shapes are different.

Next, the trained learning model was used to verify estimation results when pressure stimuli were applied to the conductive flexible member 2 under conditions different from those at the time of learning.

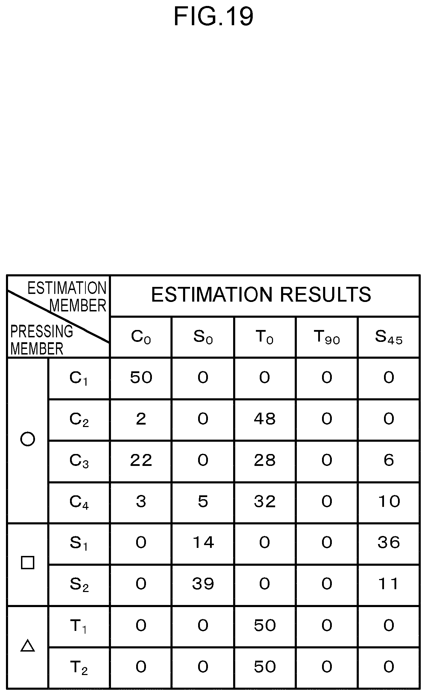

FIG. 19 shows verification results obtained by verifying estimation results resulting from differences in the sizes and the pressing positions of the pressing members 74. In FIG. 19, C₁ denotes the circular pressing member 74A according to a condition where the position of the pressing member 74A was located a predetermined distance (e.g., 5 mm) away from the learned position, and C₂ denotes the pressing member 74A according to a condition where its position was located an even further distance away (e.g., 10 mm). Furthermore, C₃ denotes the pressing member 74A according to a condition (e.g., a diameter of 40 mm) where it was reduced in size from the size (e.g., a diameter of 50 mm) of the pressing member 74A when learning took place, and C₄ denotes the pressing member 74A according to a condition (e.g., a diameter of 30 mm) where it was reduced in size even more. As for the quadrilateral pressing member 74B, S₁ denotes the pressing member 74B according to a condition where its position was located a predetermined distance (e.g., 5 mm) away from the learned position, and S₂ denotes the pressing member 74B according to a condition where its position was located an even further distance away (e.g., 10 mm). As for the triangular pressing member 74C also, T₁ denotes the pressing member 74C according to a condition where its position was located a predetermined distance (e.g., 5 mm) away from the learned position, and T₂ denotes the pressing member 74C according to condition where its position was located an even further distance away (e.g., 10 mm).

As shown in FIG. 19, it can be confirmed that conditions such as differences in the shapes of the pressing members 74 affect the estimation results. Thus, it was confirmed that the estimation process may differ in conditions different from the conditions at the time of learning.

Therefore, shape estimation results using a learning model that was trained to cover conditions such as differences in the shapes of the pressing members 74 were verified.

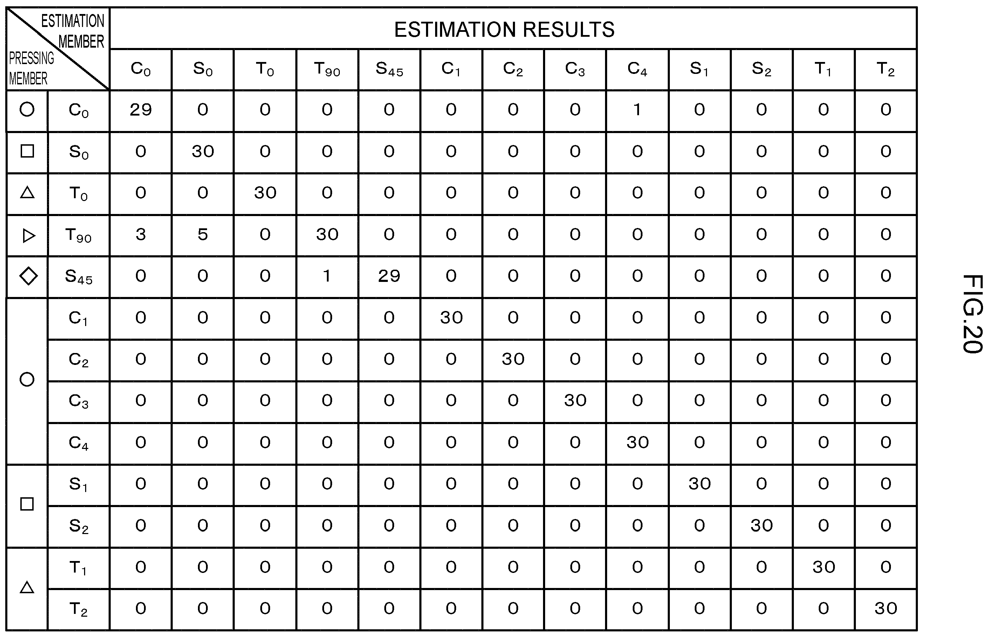

FIG. 20 shows verification results obtained by verifying estimation results using a learning model that was trained under various conditions according to differences in the sizes and the pressing positions of the pressing members 74 described above. As shown in FIG. 20, it can be confirmed that the shapes can be well estimated in regard to substantially all the conditions.

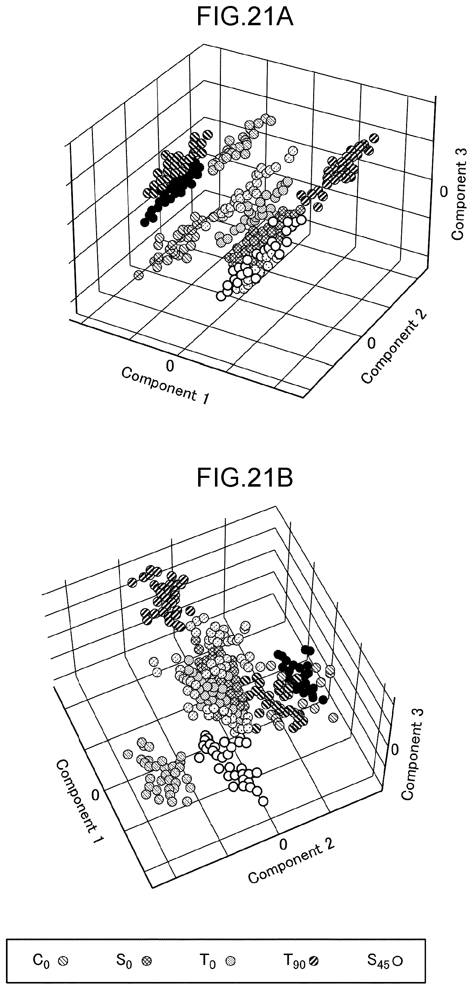

FIG. 21A and FIG. 21B show results of three-dimensionally displaying results of a principal component analysis in regard to the verification results shown in FIG. 20. Results of detecting the electrical resistance values in the detection set #1 are shown in FIG. 21A, and results in which FIG. 21A is seen from a different direction are shown in FIG. 21B.

As shown in FIG. 21A and FIG. 21B, even under various conditions, by using a learning model in which each has been learned, the results relating to the shapes of each of the pressing members 74A to 74E have separate structures, so that each of the pressing members 74A to 74E with the different shapes can be discriminated.

According to the present disclosure, it has the effect of being able to estimate shape information of a pressure stimulus utilizing an electrical property at the time of deformation of a conductive flexible material without using a special detection device.

Furthermore, the technical scope of the present disclosure is not limited to the scope in the above embodiment, since the scope of the present invention is defined by the appended claims.

Furthermore, although in the above embodiment a case was described where the inspection process is realized by a software configuration resulting from processing using a flowchart, it is not limited thereto, and, for example, each process may be realized by a hardware configuration.

Furthermore, part of the estimation device, for example, the neural network such as the learning model, may be configured as a hardware circuit.

## Claims

1. An estimation device (1), comprising:
a detection unit (76) that detects an electrical property between a plurality of detection points (75) in a conductive flexible material (2), whereby the electrical property changes based on a pressure stimulus applied by an estimation target object having an unknown shape; and
an estimation unit (5) that inputs the electrical property detected by the detection unit (76) to a learning model (51) that estimates shape information of the estimation target object,
whereby the learning module has been trained by using,
as learning data, an electrical property that changes chronologically in response to a deformation of the flexible material (2), whereby the flexible material (2) deforms based on the input from a pressure stimulus applying unit (73) of a known shape,
and shape information representing shapes of pressure stimuli that impart deformation to the flexible material (2), and
whereby the learning model (51) has been trained to
receive the electrical property as input and to output the shape information.

2. The estimation device (1) of claim 1, wherein:
the flexible material (2) is a material having an electrical property that changes in response to the deformation.

3. The estimation device (1) of claim 1 or claim 2, wherein the electrical property of the flexible material (2) is volume resistance.

4. The estimation device (1) of any one of claim 1 to claim 3, wherein the flexible material (2) is a material in which conductivity is imparted to a urethane material having a structure having a fibrous skeleton or a structure having a plurality of microscopic air bubbles scattered inside.

5. The estimation device (1) of any one of claim 1 to claim 4, wherein the learning model (51) is a model generated by training the model using, with the flexible material (2) as a reservoir, a network obtained by reservoir computing using the reservoir.

6. An estimation method, comprising, by a computer:
acquiring, from a detection unit (76) that detects an electrical property between a plurality of detection points (75) in a conductive flexible material (2), the electrical property, whereby the electrical property changes based on a pressure stimulus applied by an estimation target object having an unknown shape; and
inputting the acquired electrical property to a learning model (51) and estimating shape information of the estimation target object,
whereby the learning model has been trained by using, as learning data, an electrical property with which is associated time-series information that changes in response to deformation of the flexible material (2), whereby the flexible material (2) deforms based on the input from a pressure stimulus applying unit (73) of a known shape, and shape information of pressure stimuli that impart deformation to the flexible material (2), and
whereby the learning model (51) has been trained to receive the electrical property as input and to output the shape information.

7. An estimation program executable by a computer to perform processing, the processing comprising:
acquiring, from a detection unit (76) that detects an electrical property between a plurality of detection points (75) in a conductive flexible material (2), the electrical property, whereby the electrical property changes based on a pressure stimulus applied by an estimation target object having an unknown shape; and
inputting the acquired electrical property to a learning model (51) and estimating shape information of the estimation target object, whereby the learning model has been trained by using, as learning data, an electrical property with which is associated time-series information that changes in response to deformation of the flexible material (2), whereby the
flexible material (2) deforms based on the input from a pressure stimulus applying unit (73) of a known shape, and shape information of pressure stimuli that impart deformation to the flexible material (2), and
whereby the learning model (51) has been trained to receive the electrical property as input and to output the shape information.

8. A learning model generation device, comprising:
an acquisition unit that acquires, from a detection unit (76) that detects an electrical property between a plurality of detection points (75) in a conductive flexible material (2), which flexible material (2) deforms based on the input from a pressure stimulus applying unit (73) of a known shape, the electrical property, and acquires shape information of pressure stimuli that impart deformation to the flexible material (2); and
a learning model generation unit that generates, based on acquisition results of the acquisition unit, a learning model (51) that has been trained to receive, as input, an electrical property with which is associated time-series information that changes in response to deformation of the flexible material (2), which electrical property changes based on a pressure stimulus applied by an estimation target object having an unknown shape,
and to output shape information of the estimation target object.

## Patentansprüche

1. Schätzvorrichtung (1), umfassend:
eine Detektionseinheit (76), die eine elektrische Eigenschaft zwischen einer Vielzahl von Detektionspunkten (75) in einem leitfähigen, flexiblen Material (2) detektiert, wobei sich die elektrische Eigenschaft aufgrund eines Druckreizes ändert, der von einem Schätzzielobjekt unbekannter Form ausgeübt wird; und
eine Schätzeinheit (5), die die von der Detektionseinheit (76) detektierte elektrische Eigenschaft in ein Lernmodell (51) einspeist, das Forminformationen des Schätzzielobjekts schätzt, wobei das Lernmodul unter Verwendung, als Lerndaten, einer elektrischen Eigenschaft, die sich chronologisch als Reaktion auf eine Verformung des flexiblen Materials (2) ändert, wobei sich das flexible Material (2) aufgrund der Eingabe einer bekannten Form von einer Druckreizausübungseinheit (73) verformt, und Forminformationen, die Formen von Druckreizen darstellen, die das flexible Material (2) verformen, trainiert wurde und wobei das Lernmodell (51) darauf trainiert wurde, die elektrische Eigenschaft als Eingabe zu empfangen und die Forminformationen auszugeben.

2. Schätzvorrichtung (1) nach Anspruch 1, wobei:
das flexible Material (2) ein Material ist, das eine elektrische Eigenschaft aufweist, die sich als Reaktion auf die Verformung ändert.

3. Schätzvorrichtung (1) nach Anspruch 1 oder Anspruch 2, wobei die elektrische Eigenschaft des flexiblen Materials (2) Volumenwiderstand ist.

4. Schätzvorrichtung (1) nach einem von Anspruch 1 bis Anspruch 3, wobei das flexible Material (2) ein Material ist, bei dem einem Urethanmaterial mit einer Struktur, die ein Fasergerüst aufweist, oder einer Struktur, die eine Vielzahl von darin verstreuten mikroskopischen Luftblasen aufweist, Leitfähigkeit verliehen wird.

5. Schätzvorrichtung (1) nach einem der Anspruch 1 bis Anspruch 4, wobei das Lernmodell (51) ein Modell ist, das durch Training des Modells unter Verwendung, mit dem flexiblen Material (2) als Reservoir, eines Netzwerks erzeugt wird, das durch Reservoir Computing unter Verwendung des Reservoirs erhalten wird.

6. Schätzverfahren, umfassend mittels eines Computers:
Erfassen, von einer Detektionseinheit (76), die eine elektrische Eigenschaft zwischen einer Vielzahl von Detektionspunkten (75) in einem leitfähigen, flexiblen Material (2) detektiert, der elektrischen Eigenschaft, wobei sich die elektrische Eigenschaft aufgrund eines Druckreizes ändert, der von einem Schätzzielobjekt unbekannter Form ausgeübt wird; und
Eingeben der erfassten elektrischen Eigenschaft in ein Lernmodell (51) und Schätzen von Forminformationen des Schätzzielobjekts, wobei das Lernmodell unter Verwendung, als Lerndaten, einer elektrischen Eigenschaft, mit der Zeitreiheninformationen verknüpft sind, die sich als Reaktion auf Verformung des flexiblen Materials (2) ändern, wobei sich das flexible Material (2) aufgrund der Eingabe einer bekannten Form von einer Druckreizausübungseinheit (73) verformt, und Forminformationen von Druckreizen, die das flexible Material (2) verformen, trainiert wurde und wobei das Lernmodell (51) darauf trainiert wurde, die elektrische Eigenschaft als Eingabe zu empfangen und die Forminformationen auszugeben.

7. Schätzprogramm, das von einem Computer ausführbar ist, zum Durchführen einer Verarbeitung, wobei die Verarbeitung Folgendes umfasst:
Erfassen, von einer Detektionseinheit (76), die eine elektrische Eigenschaft zwischen einer Vielzahl von Detektionspunkten (75) in einem leitfähigen, flexiblen Material (2) detektiert, der elektrischen Eigenschaft, wobei sich die elektrische Eigenschaft aufgrund eines Druckreizes ändert, der von einem Schätzzielobjekt unbekannter Form ausgeübt wird; und
Eingeben der erfassten elektrischen Eigenschaft in ein Lernmodell (51) und Schätzen von Forminformationen des Schätzzielobjekts, wobei das Lernmodell unter Verwendung, als Lerndaten, einer elektrischen Eigenschaft, mit der Zeitreiheninformationen verknüpft sind, die sich als Reaktion auf Verformung des flexiblen Materials (2) ändern, wobei sich das flexible Material (2) aufgrund der Eingabe einer bekannten Form von einer Druckreizausübungseinheit (73) verformt, und Forminformationen von Druckreizen, die das flexible Material (2) verformen, trainiert wurde und wobei das Lernmodell (51) darauf trainiert wurde, die elektrische Eigenschaft als Eingabe zu empfangen und die Forminformationen auszugeben.

8. Vorrichtung zum Generieren von Lernmodellen, umfassend:
eine Erfassungseinheit, die von einer Detektionseinheit (76), welche eine elektrische Eigenschaft zwischen einer Vielzahl von Detektionspunkten (75) in einem leitfähigen, flexiblen Material (2) detektiert, welches flexible Material (2) sich aufgrund der Eingabe einer Druckreizausübungseinheit (73) bekannter Form verformt, die elektrische Eigenschaft erfasst und Forminformationen über Druckreize erfasst, die das flexible Material (2) verformen; und
eine Einheit zum Generieren von Lernmodellen, die aufgrund von Erfassungsergebnissen der Erfassungseinheit ein Lernmodell (51) generiert, das darauf trainiert wurde, als Eingabe eine elektrische Eigenschaft zu empfangen, mit der Zeitreiheninformationen verknüpft sind, die sich als Reaktion auf Verformung des flexiblen Materials (2) ändern, wobei sich diese elektrische Eigenschaft aufgrund eines Druckreizes ändert, der von einem Schätzzielobjekt unbekannter Form ausgeübt wird, und Forminformationen des Schätzzielobjekts auszugeben.

## Revendications

1. Dispositif d'estimation (1), comprenant :
une unité de détection (76) qui détecte une propriété électrique entre une pluralité de points de détection (75) dans un matériau conducteur flexible (2), la propriété électrique changeant sur la base d'une stimulation de pression appliquée par un objet cible d'estimation présentant une forme inconnue ; et
une unité d'estimation (5) qui entre la propriété électrique détectée par l'unité de détection (76) dans un modèle d'apprentissage (51) qui estime des informations de forme de l'objet cible d'estimation, le module d'apprentissage ayant été entraîné en utilisant, comme données d'apprentissage, une propriété électrique qui change chronologiquement en réponse à une déformation du matériau flexible (2), le matériau flexible (2) se déformant sur la base de l'entrée d'une unité d'application de stimulation de pression (73) de forme connue, et des informations de forme représentant des formes de stimulations de pression qui confèrent une déformation au matériau flexible (2), et le modèle d'apprentissage (51) ayant été entraîné pour recevoir la propriété électrique en entrée et délivrer les informations de forme.

2. Dispositif d'estimation (1) selon la revendication 1, dans lequel :
le matériau flexible (2) est un matériau présentant une propriété électrique qui change en réponse à la déformation.

3. Dispositif d'estimation (1) selon la revendication 1 ou la revendication 2, dans lequel la propriété électrique du matériau flexible (2) est une résistance volumique.

4. Dispositif d'estimation (1) selon l'une quelconque des revendications 1 à 3, dans lequel le matériau flexible (2) est un matériau dans lequel une conductivité est conférée à un matériau d'uréthane présentant une structure présentant un squelette fibreux ou une structure présentant une pluralité de bulles d'air microscopiques dispersées à l'intérieur.

5. Dispositif d'estimation (1) selon l'une quelconque des revendications 1 à 4, dans lequel le modèle d'apprentissage (51) est un modèle généré en entraînant le modèle à l'aide, avec le matériau flexible (2) comme réservoir, d'un réseau obtenu par calcul de réservoir à l'aide du réservoir.

6. Procédé d'estimation, comprenant, par un ordinateur :
l'acquisition, à partir d'une unité de détection (76) qui détecte une propriété électrique entre une pluralité de points de détection (75) dans un matériau conducteur flexible (2), de la propriété électrique, la propriété électrique changeant sur la base d'une stimulation de pression appliquée par un objet cible d'estimation présentant une forme inconnue ; et
l'entrée de la propriété électrique acquise dans un modèle d'apprentissage (51) et l'estimation d'informations de forme de l'objet cible d'estimation, le modèle d'apprentissage ayant été entraîné en utilisant, comme données d'apprentissage, une propriété électrique à laquelle est associée une information de série temporelle qui change en réponse à la déformation du matériau flexible (2), le matériau flexible (2) se déformant sur la base de l'entrée d'une unité d'application de stimulation de pression (73) de forme connue, et d'informations de forme de stimulations de pression qui confèrent une déformation au matériau flexible (2), et le modèle d'apprentissage (51) ayant été entraîné pour recevoir la propriété électrique en entrée et délivrer les informations de forme.

7. Programme d'estimation exécutable par un ordinateur pour réaliser un traitement, le traitement comprenant :
l'acquisition, à partir d'une unité de détection (76) qui détecte une propriété électrique entre une pluralité de points de détection (75) dans un matériau conducteur flexible (2), de la propriété électrique, la propriété électrique changeant sur la base d'une stimulation de pression appliquée par un objet cible d'estimation présentant une forme inconnue ; et
l'entrée de la propriété électrique acquise dans un modèle d'apprentissage (51) et l'estimation d'informations de forme de l'objet cible d'estimation, le modèle d'apprentissage ayant été entraîné en utilisant, comme données d'apprentissage, une propriété électrique à laquelle est associée une information de série temporelle qui change en réponse à la déformation du matériau flexible (2), le matériau flexible (2) se déformant sur la base de l'entrée d'une unité d'application de stimulation de pression (73) de forme connue, et d'informations de forme de stimulations de pression qui confèrent une déformation au matériau flexible (2), et le modèle d'apprentissage (51) ayant été entraîné pour recevoir la propriété électrique en entrée et délivrer les informations de forme.

8. Dispositif de génération de modèle d'apprentissage, comprenant :
une unité d'acquisition qui acquiert, à partir d'une unité de détection (76) qui détecte une propriété électrique entre une pluralité de points de détection (75) dans un matériau conducteur flexible (2), le matériau flexible (2) se déformant sur la base de l'entrée d'une unité d'application de stimulation de pression (73) de forme connue, la propriété électrique, et acquiert des informations de forme de stimulations de pression qui confèrent une déformation au matériau flexible (2) ; et
une unité de génération de modèle d'apprentissage qui génère, sur la base de résultats d'acquisition de l'unité d'acquisition, un modèle d'apprentissage (51) qui a été entraîné pour recevoir, en entrée, une propriété électrique à laquelle est associée une information de série temporelle qui change en réponse à une déformation du matériau flexible (2), la propriété électrique changeant sur la base d'une stimulation de pression appliquée par un objet cible d'estimation présentant une forme inconnue, et délivrer des informations de forme de l'objet cible d'estimation.
